Europäisches Patentamt

European Patent Office

Office européen des brevets

(11) Veröffentlichungsnummer: **0 019 136**
**B1**

(12) **EUROPÄISCHE PATENTSCHRIFT**

(45) Veröffentlichungstag der Patentschrift: **24.08.83**

(21) Anmeldenummer: **80102298.9**

(22) Anmeldetag: **28.04.80**

(51) Int. Cl.³: **F 27 B 7/22,** F 16 C 13/04,
F 26 B 11/04

(54) **Drehtrommel mit Laufring zur Lagerung der Drehtrommel auf einem einstellbaren Rollenträger.**

(30) Priorität: **09.05.79 GB 7916050**

(43) Veröffentlichungstag der Anmeldung:
**26.11.80 Patentblatt 80/24**

(45) Bekanntmachung des Hinweises auf die Patenterteilung:
**24.08.83 Patentblatt 83/34**

(84) Benannte Vertragsstaaten:
**BE DE FR IT LU NL**

(56) Entgegenhaltungen:
**DE - A - 2 102 580**
**DE - B - 1 064 300**
**DE - C - 749 856**
**FR - A - 1 432 252**
**GB - A - 1 527 419**
**US - A - 2 269 700**
**US - A - 3 308 657**

(73) Patentinhaber: **F.L. Smidth & Co. A/S**
**77 Vigerslev Allé**
**DK-2500 Valby Copenhagen (DK)**

(72) Erfinder: **Hjaeresen, Torben, Dipl.-Ing.**
**Vigerslev Allé 77**
**DK-2500 Kopenhagen-Valby (DK)**

(74) Vertreter: **Meyer-Roxlau, Reiner Ferdinand, Dipl.-Ing. et al,**
**Patentanwälte Dr. Franz Lederer Dipl.-Ing. Reiner F. Meyer-Roxlau Lucile-Grahn-Strasse 22**
**D-8000 München 80 (DE)**

## Drehtrommel mit Laufring zur Lagerung der Drehtrommel auf einem einstallbaren Rollenträger

Die Erfindung betrifft eine Drehtrommel, insbesondere einen Drehofen, mit einem Laufring, mittels dessen die Drehtrommel auf einem einstellbaren Rollenträger gelagert ist der zwei Rollen aufweist, die je eine Welle besitzen, die ihrerseits symmetrisch mit Hilfe von zwei Largern gelargert ist, die einzeln an jeder Seite der Rolle angeordnet und einzeln an jedem der beiden Enden eines Querträgers angebaut sind, der mittels eines zentralen, im wesentlichen nach Art eines Kreiszylinderteils gestalteten Pendellagers gelagert ist.

Aus der GB—A—15 27 419 bzw. der inhaltsgleichen DE—A—27 36 111 ist eine Drehtrommel mit einem Rollenträger der vorstehend angegebenen Art bekannt, bei der der Querträger auf seinem Pendellager pendeln kann, wodurch es ermöglicht wird, daß sich die Achse der Rolle stets entsprechend der Neigung der Achse des Laufrings und damit folglich des Ofens bzw. der Trommel selbständigen einstellt. Dies gewährleistet einen vollständigen Linienkontakt zwischen dem Laufring und dem Rollenträger zu allen Zeiten und minimalisiert die Hertz- bzw. Schwingungsbeanspruchung zwischen diesen Teilen.

Es ist jedoch eine Tatsache, daß Trommeln und insbesondere Drehöfen eine erhebliche Wärmeausdehnung in Axialrichtung erfahren, in deren Folge einige der an der Trommel befestigten Laufringe in irgendeinem Ausmaß ihre Stellung in Axialrichtung im Verhältnis zu den Rollen ihrer Rollenträger verändern, da die Rollen normalerweise nicht in der Lage sind, eine gleiche oder ähnliche Axialverschiebung nachzuvolziehen. Bei dem vorstehend angegebenen bekannten Träger sind die Rollen tatsächlich in ihrer Position festgehalten, so daß sie eine Verschiebung mittels ihres Querträgers verhindern, der in Pendel- bzw. Schwenkarmen aufgehängt ist, die eine solche Verschiebung nicht gestatten. Wenn der Laufring in Axialrichtung verschoben wird, befindet er sich somit nur in Linienberührung mit einem bestimmten Teil jeder Rolle, was zu einer ungleichen Belastung derselben sowie auch der Lager führt. Wenn die Rolle nicht breiter als der Laufring gestaltet ist, der dann im Falle einer Axialverschiebung nicht über seine Rollen vorsteht, kann weiter eine unerwünscht große Hertz- bzw. Schwingungsbeanspruchung zwischen Rolle und Laufring bestehen.

Der Erfindung liegt die Aufgabe zugrunde, die vorstehend angegebenen Nachteile der bekannten Drehtrommeln zu überwinden.

Diese Aufgabe wird erfindungsgemäß dadurch gelöst, daß das Pendellager in verschiebbarer Berührung an der Innenseite einer Lagerschale in der Form eines ringförmigen Zylindersegments steht, dessen Außenseite auf einer horizontalen Basis aufliegt, so daß die Lagerschalen mit dem Pendellager auf der Basis eine Pendelbewegung auszuführen vermag, und daß Mittel vorgesehen sind, die von dem Laufring betätigbar sind derart, daß das Pendellager über der Lagerschale zur Ausführung einer gleitenden Bewegung und damit zur Verfolgung jeder Axialverschiebung des Laufrings veranlaßt ist.

Erfindungsgemäß kann der Rollenträger somit jederzeit der Axialverschiebung des entsprechenden Laufrings folgen, und zwar in einer solchen Weise, daß konstant eine gleichmäßig verteilte Belastung an jeder Rolle und deren Lagern gewährleistet ist sowie gleichzeitig eine minimale Hertz- bzw. Schwingungsbeanspruchung zwischen Rolle und Laufring. Des weiteren muß die Breite jeder Rolle nicht notwendigerweise größer als die des Laufrings sein, was bedeutet, daß der Abstand zwischen den beiden Lagern der Rolle kleiner sein kann als im Falle einer breiteren Rolle. Hierdurch wird die Verwendung einer steiferen und stärkeren Rollenwelle und folglich eines robusteren Rollenträgers ermöglicht. Die Notwendigkeit der Lagerung der Rollenwelle in kugeligen Lagern, die bisher wegen der Rollendurchbiegung notwendig gewessen ist, die durch die an der Rolle und ihrer Welle einwirkende schwere Kraft verursacht wird, kann damit überwunden sein, es sei denn kugelförmige Lager wären notwendig in Hinsicht auf Lagereinstellungen. Wenn die kugelförmigen Lager entfallen, kann die Welle noch dicker und steifer gestaltet werden, ohne die Abmessungen des Lagergehäuses vergrößern zu müssen.

Die Erfindung führt zu minimalen axialen Reibkräften zwischen Laufring und Rolle, da letztere dem Laufring in Anpassung an dessen gegebenenfalls auftretende Axialverschiebung folgt. Diese Reibungskräfte, die auf die Längsveränderungen der Trommel zurückgehen und beispielsweise im Falle des Anhaltens eines Drehofens entstehen, sind notwendigerweise sehr starke Kräfte. Normalerweise ist ein Drehofen mittels einer Führungsrolle in seiner Position gehalten, die gegen die Seite eines Laufrings an einem Ende des Ofens anliegt. In dem Fall starker axialer Reibungskräfte zwischen Laufringen in anderen Anordnungspositionen am Ofen und ihren Rollen kann die Führungsrolle so starken Belastungen ausgesetzt sein, die zum Bruch der Führungsrolle oder ihrer Basis führen.

Der Rollenträger kann so gestaltet sein, daß seine beiden Rollen von einem gemeinsamen Querträger getragen sind, der ein Pendellager unter jeder Rolle aufweist, oder daß die beiden Rollen von einem von zwei separaten Querträgern getragen sind, die dann über Spannkabel bzw. -stangen miteinander in Verbindung stehen.

Die von dem Laufring betätigbaren Mittel können mechanisch sein und in an den Querträgern befestigten Klammern bestehen, die gegen jede Seite des Laufrings anliegen. Diese Ausbildung stellt eine einfache Übergabe der Axialverschiebung des Laufrings direkt an den Rolleträger sicher.

In alternativer Ausbildung können diese Mittel in an der Basis befestigten Hydraulikeinheiten bestehen, deren Kolben auf den Querträger in Axialrichtung der Rollen einzuwirken in der Lage ist und die durch einen Führler steuerbar sind, der gegen einen Rand des Laufrings anliegt. Auf diese Weise ist es möglich, ohne große Belastung an den Seiten des Laufrings starke Verschiebungskräfte mittels der Hydraulikeinheiten zur Verschiebung des Querträgers in Axialrichtung der Trommel und der Roller zu schaffen.

Zusätzlich soll darauf hingewiesen werden, daß die Rollenträger mechanisch oder hydraulisch oder in einer geeigneten Weise gesteuert werden, um eine unerwünschte Querverschiebung zu den Achsen der Trommel und der Rollen zu vermeiden.

Im folgenden werden einige Ausführungsbeispiele einer erfindungsgemäßen Drehtrommel mit Rollenträger, die in den Zeichnungen dargestellt sind, näher erläutert; im einzelnen zeigen:

Fig. 1 eine schematische Ansicht eines Rollenträgers mit einem Teil einer Drehtrommel gesehen in Axialrichtung der Rolle,

Fig. 2 eine Seitenansicht zu Fig. 1,

Fig. 3 den Rollenträger in verschiedenen axialverschobenen Stellungen,

Fig. 4 eine Seitenansicht eines anderen Rollenträgers mit einem Teil einer Drehtrommel und

Fig. 5 eine der Darstellung der Fig. 1 entsprechende Ansicht eines weiteren Rollenträgers mit einem Teil einer Drehtrommel.

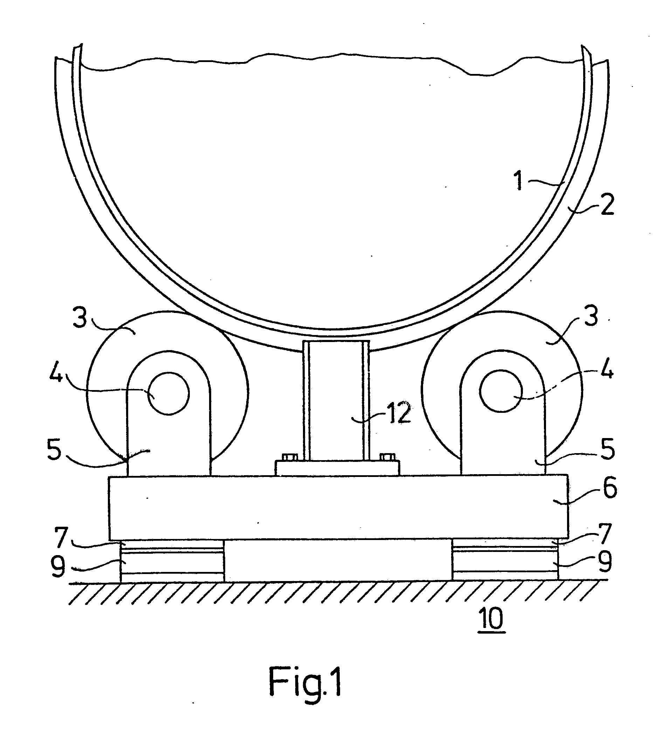

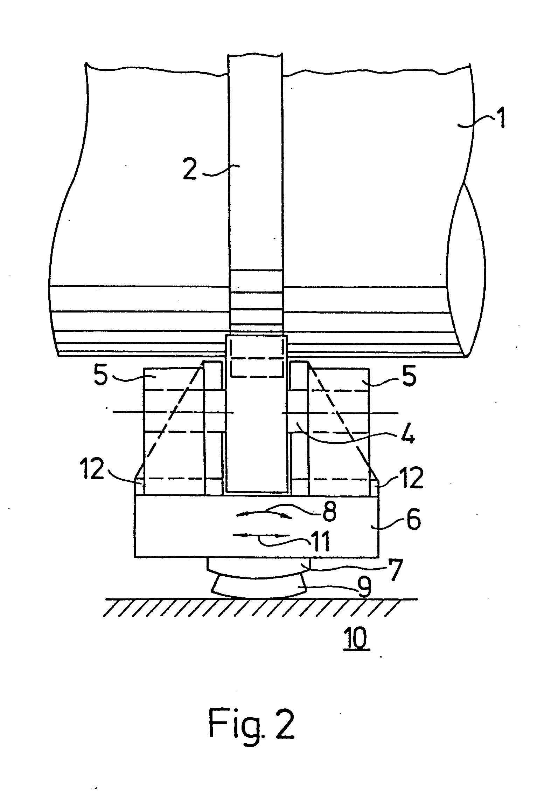

Eine Trommel 1 ist über einen Laufring 2 auf zwei Rollen 3 gelagert. Die Welle 4 jeder Rolle 3 ruht in zwei Lagern 5, die einzeln zu beiden Seiten der Rolle 3 angeordnet sind. Die Lager 5 sind gemäß Darstellung in Figur 2 an den beiden Enden eines Querträgers oder Waagebaums 6 angeordnet, der gemäß Darstellung in Figur 1 ein den beiden Rollen 3 des Rollenträgers gemeinsamer Träger sein kann.

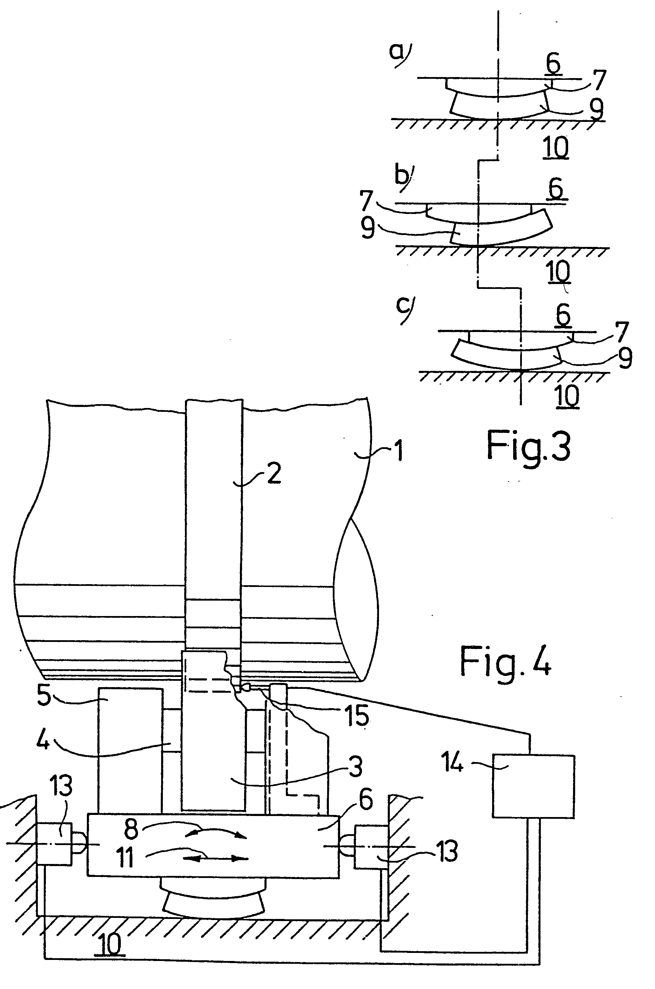

Gemäß Darstellung in Figur 1 ist der Querträger 6 auf einer Basis unter jeder Rolle 3 mittels eines Pendellagers 7 gelagert, wodurch der Querträger 6, wie in Figur 2 mittels eines Doppelpfeils 8 angegeben ist, eine Pendelbewegung ausführen kann, in deren Folge sich die Rollen 3 stets entsprechend der Neigung der Achse des Laufrings 2 einstellen. Das Pendellager 7 liegt gagen die Innenseite eines ringförmigen Zylindersegments 9 an, dessen Außenseite auf einer Basis 10 aufliegt und mit dem Pendellager 7 auf dieser eine Pendelbewegung ausführen kann. Die aus dem Pendellager 7 und dem Zylindersegment 9 bestehende Einheit wirkt somit als eigentliches Pendellager für den Querträger 6. Die Innenseite des Zylindersegments 9 ist mit einer Gleitfläche ausgestattet, in deren Folge das Pendellager 7 im Zylindersegment 9 gleiten kann, wodurch sich der Querträger 6 in der Richtung des Doppelpfeils 11 der Figur 2 verschieben kann. Während dieser Verschiebung führt das Zylindersegment 9 auf der Basis 10 eine Pendelbewegung aus, während das Pendellager 7 auf der Innenseite des Zylindersegments 9 entweder nach rechts oder nach links gleitet, und zwar ohne pendelnde Bewegung des Querträgers 6, wie in Figur 3 dargestellt ist.

Damit der Querträger 6 und folglich die Rollen 3 eine Axialverschiebung gleich derjenigen des Laufrings 2 erfahren, machen die Beispiele gemäß Figur 1 und 2 Gebrauch von an dem Querträger 6 zu jeder Seite des Laufrings 2 befestigten Klammern 12, deren oberstes Ende gegen die Seiten des Laufrings 2 anliegt und entlang derselben verschiebbar ist, wie in Figur 2 dargestellt ist.

Der mechanische Antrieb des Rollenträgers entsprechend der Axialverschiebung des Laufrings 2, der in den Figuren 1 und 2 dargestellt ist, kann durch anders geartete Antriebsmittel ersetzt werden. So wird bei dem Ausführungsbeispiel gemäß Figur 4 der Querträger 6 an jedem Ende von einer Hydraulikeinheit 13 beaufschlagt, die über eine Regeleinrichtung 14 mittels eines Fühlers 15 gesteuert wird, der die Axialverschiebung des Laufrings 2 ertastet und diese Verschiebung an den Querträger 6 weitergibt.

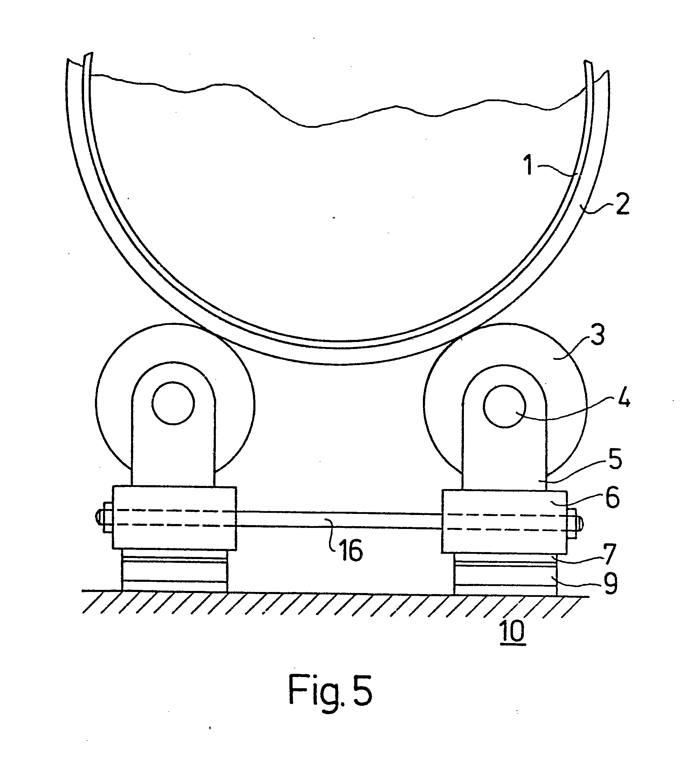

Wie bereits angegeben besteht der Rollenträger gemäß Figur 1 aus einem den beiden Rollen 3 gemeinsamen Querträger 6. Jede Rolle kann jedoch ihren eigenen Querträger besitzen, wie in Figur 5 dargestellt ist, jedoch müssen in diesem Fall die beiden Querträger 6 über Spannungskabel oder -stangen 16 miteinander in Verbindung stehen.

Schließlich sollte beachtet werden, daß die innere Gleitfläche des ringförmigen Zylindersegments 9 eine Kugellargerfläche, eine hydrostatische Lagerfläche oder eine andere geeignete Fläche sein kann.

**Patentansprüche**

1. Drehtrommel mit einem Laufring, mittels dessen die Drehtrommel auf einem einstellbaren Rollenträger gelagert ist, der zwei Rollen aufweist, die je eine Welle besitzen, die symmetrisch mit Hilfe von zwei Lagern gelagert ist, die einzeln an jeder Seite der Rolle angeordnet und einzeln an jedem der beiden Enden eines Querträgers angebaut sind, der mittels eines zentralen, im wesentlichen nach Art eines Kreiszylinderteils gestalteten Pendellagers gelagert ist, dadurch gekennzeichnet, daß das Pendellager (7) in verschiebbarer Berührung an der Innenseite einer Lagerschale in der Form eines ringförmigen Zylindersegments (9) steht, dessen Außenseite auf einer horizontalen Basis (10) aufliegt, so daß die Lagerschale (9) mit dem Pendellager (7) auf der Basis (10) eine Pendelbewegung auszuführen vermag, und daß Mittel (12; 13), vorgesehen sind, die von dem Laufring (2) betätigbar sind derart, daß das Pendellager (7) über de Lagerschale (9) zur Ausführung einer gleitenden Bewegung und damit zur Verfolgung jeder Axialverschiebung des Laufrings (2) veranlaßt ist.

2. Drehtrommel nach Anspruch 1, dadurch gekennzeichnet, daß die beiden Rollen (3) von einem gemeinsamen Querträger (6) getragen sind, der mit Hilfe eines separaten Pendellagers (7) unter jeder Rolle (3) gelagert ist.

3. Drehtrommel nach Anspruch 1, dadurch gekennzeichnet, daß die beiden Rollen (3) von jeweils einen von zwei separaten Querträgern (6) getragen sind, die über Spannkabel bzw. -stangen (16) miteinander verbunden sind.

4. Drehtrommel nach einem der vorhergehenden Ansprüche, dadurch gekennzeichnet, daß die von dem Laufring (2) betätigbaren Mittel in an dem Querträger (6) befestigten Klammern (12) bestehen, die gegen jede Seite des Laufrings (2) anliegen.

5. Drehtrommel nach einem der Ansprüche 1—3, dadurch gekennzeichnet, daß die von dem Laufring (2) betätigbaren Mittel in an der Basis (10) angeordneten Hydraulikeinheiten (13) bestehen, deren Kolben auf den Querträger (6) in Axialrichtung der Rollen (3) einzuwirken in der Lage ist und die durch einen Fühler (15) steuerbar sind, der gegen einen Rand des Laufrings (2) anliegt.

6. Drehtrommel nach einem der vorhergehenden Ansprüche, dadurch gekennzeichnet, daß die Innenfläche der Lagerschale (9) eine Kugellagerfläche ist.

7. Drehtrommel nach einem der Ansprüche 1 bis 5, dadurch gekennzeichnet, daß die Innenfläche der Lagerschale (9) eine hydrostatische Schublagerfläche ist.

## Claims

1. Rotary drum with a live ring, by means of which the rotary drum is supported on an adjustable roller support having two rollers each provided with a shaft which is symmetrically supported by means of two bearings, one disposed at each side of the roller, and one set on each of two ends of a cross beam which is centrally supported by means of a rocking bearing essentially in the form of a part circular cylinder, characterised in that the rocking bearing (7) rests in riding contact on the inside of a bearing shell in the form of an annular cylinder segment (9) the outer side of which rests on a horizontal base (10), so that the bearing shell (9) can perform a rocking movement with the rocking bearing (7) on the base (10) and that there are provided means (12,13) which are actuable by the live ring (2) in such a manner that the rocking bearing (7) is caused to make a riding movement over the bearing shell (9) and thereby follow axial displacement of the live ring (2).

2. Rotary drum according to claim 1, characterised in that the two rollers (3) are supported on a common cross beam (6), which is supported by means of a separate rocking bearing (7) under each roller (3).

3. Rotary drum according to claim 1, characterised in that both rollers (3) are supported by a respective one of two separate cross beams (6) which are connected by tension cables or rods (16).

4. Rotary drum according to one of the preceding claims, characterised in that the means actuable by the live ring (2) comprise brackets (12) fixed to the cross beam (6) and bearing against each side of the live ring (2).

5. Rotary drum according to one of claims 1 to 3, characterised in that the means actuable by the live ring (2) comprise hydraulic units (13) disposed on the base (10) and of which pistons act on the cross beam (6) in the axial direction of the rollers (3) and are controlled by a sensor (15), which engages an edge of the live ring (2).

6. Rotary drum according to one of the preceding claims, characterised in that the inner surface of the bearing shell (9) is a ballbearing surface.

7. Rotary drum according to one of claims 1 to 5, characterised in that the inner surface of the bearing shell (9) is a hydrostatic thrust bearing surface.

## Revendications

1. Tambour rotatif comportant une bague de roulement au moyen de laquelle le tambour rotatif est monté sur un porte-galets réglable présentant deux galets ayant chacun un axe et qui, de leur côté, sont montés symétriquement, à l'aide de deux paliers, lesquels sont montés séparément de chaque côté du galet et sont fixés aux deux extrémités d'une traverse qui, de son côté, est montée au moyen d'un palier central à rotule ou oscillant, essentiellement analogue à un élément d'un cylindre circulaire, tambour caractérisé en ce que le palier à rotule (7) s'applique en contact glissant contre la face intérieure d'une coquille ayant la forme d'un segment cylindrique annulaire (9), dont la face extérieure repose sur une base horizontale (10), de sorte que la coquille (9) peut, avec le palier à rotule (7), effectuer un mouvement d'oscillation sur la base (10), et en ce que sont prévus des moyens (12, 13) qui peuvent être actionnés par la bague de roulement (2) de manière à obliger le palier oscillant (7) à effectuer, au-dessus de la coquille (9), un mouvement glissant et donc, à accompagner chaque déplacement axial de la bague de roulement (2).

2. Tambour rotatif selon la revendication 1, caractérisé en ce que les deux galets (3) sont portés par une traverse commune (6) qui est montée, à l'aide d'un palier à rotule séparé (7), sous chaque galet (3).

3. Tambour rotatif selon la revendication 1, caractérisé en ce que les deux galets (3) sont supportés chacun par une traverse séparée (6), les deux traverses étant reliées ensemble au moyen de câbles ou de tiges de tension (16).

4. Tambour rotatif selon l'une quelconque des revendications précédentes, caractérisé en ce que les moyens pouvant être actionnés par la bague de roulement (2) sont constitués par des pinces (12) fixées sur la traverse (6) et qui s'appliquent contre les deux côtés de la bague de roulement (2).

5. Tambour rotatif selon l'une quelconque des revendications 1 à 3, caractérisé en ce que les moyens pouvant être actionnés par la bague de roulement (2) sont constitués par des actionneurs hydrauliques (13) montés sur la base (10), dont les pistons agissent, dans la direction de l'axe des galets (3), sur la traverse (6), et qui peuvent être commandés par un palpeur (15) s'appliquant contre l'un des bords de la bague de roulement (2).

6. Tambour rotatif selon l'une quelconque des revendications précédentes, caractérisé en ce que la surface intérieure de la coquille (9) est une surface de roulement à billes.

7. Tambour rotatif selon l'une quelconque des revendications 1 à 5, caractérisé en ce que la surface intérieure de la coquille (9) est une surface d'appui et de glissement hydrostatique.

Fig.1

**Fig. 2**

Fig.3

Fig. 4

Fig. 5

4